# EUROPEAN PATENT APPLICATION

(11) **EP 4 082 759 A2**
(43) Date of publication of application: **02.11.2022**
(21) Application number: 22170551.0
(22) Date of filing: 28.04.2022
(51) Int. Cl.: B29C 65/08

(54) **WEB PROCESSING MACHINES WITH ULTRASONIC SEALERS**

(30) Priority: 29.04.2021 US 202163181475 P; 26.04.2022 US 202217729580
(71) Applicant: CMD Corporation, Appleton, WI 54911 (US)
(72) Inventor: EVANS, John Holmes, Appleton, Wisconsin 54913 (US); WHITE, Christopher Lee, Little Suamico, Wisconsin 54141 (US)
(74) Representative: Marks & Clerk LLP

(57) **Abstract**

In certain examples, a machine (10) that forms a web (20) into bags or pouches includes a sealing section through which the web (20) is conveyed in a machine direction (MD). The sealing section is configured to form a lap seal in the web (20) and has an input end configured to receive the web (20) which has a first web section (41) and a second web section (42). An ultrasonic sealer (50) with a horn (51) and an anvil (52) defines a nip (79) therebetween through which the first web section (41) passes. The ultrasonic sealer (50) is configured to form the lap seal in the first web section (41). The anvil (52) is positioned between the first web section (41) and the second web section (42). An output end is configured to dispense the web (20) with the lap seal formed therein.

## Description

### FIELD

The present disclosure relates to machines that convert a web and more specifically to machines that convert a web into pouches or bags with lap seals using ultrasonic sealers.

### BACKGROUND

U.S. Patent No. 7,191,575 discloses a vertical form fill-and-seal continuous pouch machine having a forming tube.

U. S. Patent No. 8,029,428 discloses a machine and method for making bags from a web traveling from an input section to a rotary drum to an output section.

U.S. Patent No. 10,946,591 discloses a method and apparatus for making bags or pouches. An ultrasonic sealer may be used to form the seals, and different sealing patterns may be utilized.

### SUMMARY

This Summary is provided to introduce a selection of concepts that are further described below in the Detailed Description. This Summary is not intended to identify key or essential features of the claimed subject matter, nor is it intended to be used as an aid in limiting the scope of the claimed subject matter.

In certain examples, a machine that forms a web into bags or pouches includes a sealing section through which the web is conveyed in a machine direction. The sealing section is configured to form a lap seal in the web and has an input end configured to receive the web which has a first web section and a second web section. An ultrasonic sealer with a horn and an anvil defines a nip therebetween through which the first web section passes. The ultrasonic sealer is configured to form the lap seal in the first web section. The anvil is positioned between the first web section and the second web section. An output end is configured to dispense the web with the lap seal formed therein.

Various other features, objects, and advantages will be made apparent from the following description taken together with the drawings.

### BRIEF DESCRIPTION OF THE DRAWINGS

The present disclosure is described with reference to the following Figures. The same numbers are used throughout the Figures to reference like features and like components.
Fig. 1 is a perspective view of an example machine of the present disclosure.
Fig. 2 is another perspective view of the machine of Fig. 1.
Fig. 3 is a schematic diagram of a web folded for lap sealing.
Fig. 4 is a perspective view of an example arm assembly supporting an anvil of the present disclosure.
Figs. 5-6 are perspective views of the arm assembly of Fig. 4 interacting with a web of material.
Fig. 7 is a side view of the arm assembly depicted in Fig. 6.
Fig. 8 is an end view of the arm assembly depicted in Fig. 6 with a web of material.
Fig. 9 is a schematic diagram of an example sealing station of the present disclosure.
Fig. 10 is a perspective view of an example arm assembly.
Fig. 11 is another perspective view of the arm assembly of Fig. 10.
Fig. 12 is a side view of the arm assembly of Fig. 10.
Fig. 13 is an end view of the arm assembly of Fig. 10.
Fig. 14 is a cross-sectional view of the arm assembly of Fig. 10 along line 14-14 on Fig. 12.
Fig. 15 is a perspective view of an example anvil.
Fig. 16 is a cross-sectional view of the anvil of Fig. 15.
Fig. 17 is an enlarged partial view of the anvil of Fig. 15 within line 17-17 on Fig. 16.
Fig. 18 is a perspective view of another example anvil.
Fig. 19 is an enlarged partial view of the anvil of Fig. 18 within line 19-19 on Fig. 18.
Fig. 20 is a cross-sectional view of the anvil of Fig. 18 at one of the grooves in the approximate location of line 20-20 on Fig. 19.
Fig. 21 is a perspective view of another example anvil.
Fig. 22 is an end view of the anvil of Fig. 21.
Fig. 23 is an enlarged partial view of the anvil of Fig. 21 within line 23-23 on Fig. 22.
Fig. 24 is a schematic diagram depicting a partial cross-section of the web.
Fig. 25 is a schematic diagram of an example control system of the present disclosure.

### DETAILED DESCRIPTION

Known web processing machines convert a web, which is usually supplied as a continuous sheet of material from a web supply roll, into pouches or bags. The machine may be a continuous motion machine or an intermittent motion machine, or a combination machine with features of both continuous motion machines and intermittent motion machines.

Continuous motion machines convey the web at a constant speed, and various operations are performed on or to the web as the machine conveys the web through the machine. The machine may further conduct various operations or maneuvers on the web to create the bag or pouch. For example, the machine may form one or more seals in the web with a sealer to at least partially form the pouches or bags. The machine may also heat the web with a heater, cool the web with a cooler, apply an insert (e.g., zipper) into the web, cut the web with a knife or cutter, and/or perforate the web with a perforator. The machine may include rotary drums and/or shuttles that move sealer components such that there is no relative motion between the web to the sealer components.

Alternatively, intermittent motion machines move and stop the web such that one or more operations are performed on the web when the web is stopped. For example, when the web is stopped, the sealer may form a seal in the web. The web is then advanced and again stopped so that a different operation may be performed on the web.

When forming pouches or bags, the machine (such as the continuous motion machines or intermittent motion machines noted above), forms one or more seals in the web. Each individual bag or pouch includes one or more seals, and each bag or pouch typically has an unsealed opening through which objects, such as food products, are placed into the bag or pouch. After objects are placed into the bag or pouch, the machine may subsequently form an additional seal in the web, or add a closure mechanism such as a zipper, to thereby close the opening and fully enclose the objects in the bag or the pouch.

A lap seal is a seal that is commonly formed in a web when forming bags or pouches. To form the lap seal, the machine conveys the web in a machine direction from the supply roll and through a folding station that folds opposing sides of the web toward each other in the cross directions. Note that the cross directions oppose each other and are transverse (e.g., perpendicular) to the machine direction (the machine direction and the cross direction are described further hereinbelow). Accordingly, the opposing sides of the web overlap each other such that the web is folded into the shape of a continuous tube. In this shape, a portion of the inside surface of the web overlaps a portion of the outside surface of the web.

The folded web is conveyed downstream to a sealing station where the lap seal is formed by sealing or adhering the overlapping sides of the web to each other. Known machines include sealing components, such as heated seal bars, that form the lap seal in the folded web. Through research and experimentation, the present inventors recognized that machines that use heated seal bars to form lap seals require that the seal bars be pre-heated to a desired sealing temperature and further require a large amount of energy to maintain the desired sealing temperature while the machine is operated and the seals are being formed. Furthermore, the present inventors recognized that other machines for forming seals often include multiple sealers and may further include cooling devices, sections for cooling the seals, and/or require compressed air systems that cool the formed seal and/or surrounding web. As such, the present inventors developed improved machines that form the lap seal in the web at lower energy costs, with good seal strengths, and the forming does not require cooling devices or cooling areas to cool the seals allowing the machine to have a smaller footprint and a shorter web path than conventional machines. Note the shorter web path can improve web handling and reduces web scrap. The present inventors also developed machines that require little maintenance, have minimal start-up time requirements, permit real-time seal adjustments, permit seal customizations, and/or have increased machine efficiency. Accordingly, the present inventors developed the machines and the sealing stations (and features and components thereof) of the present disclosure.

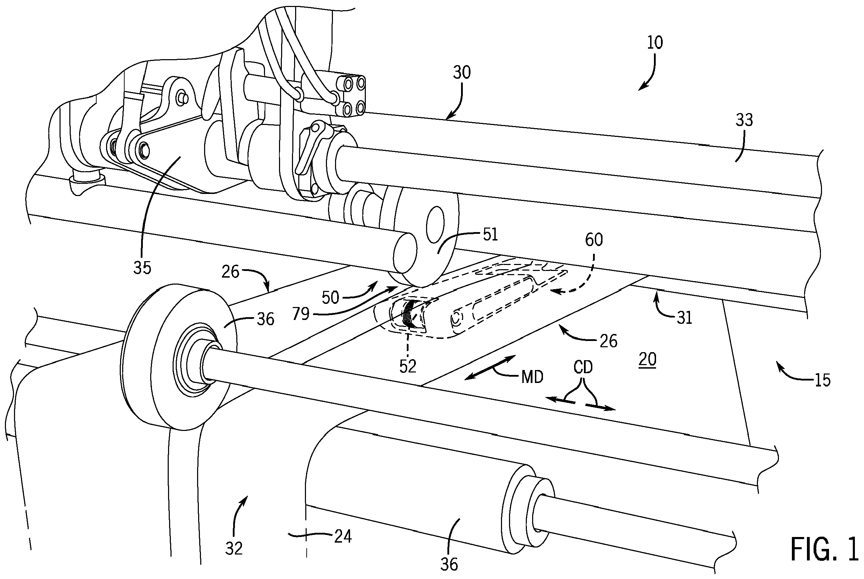

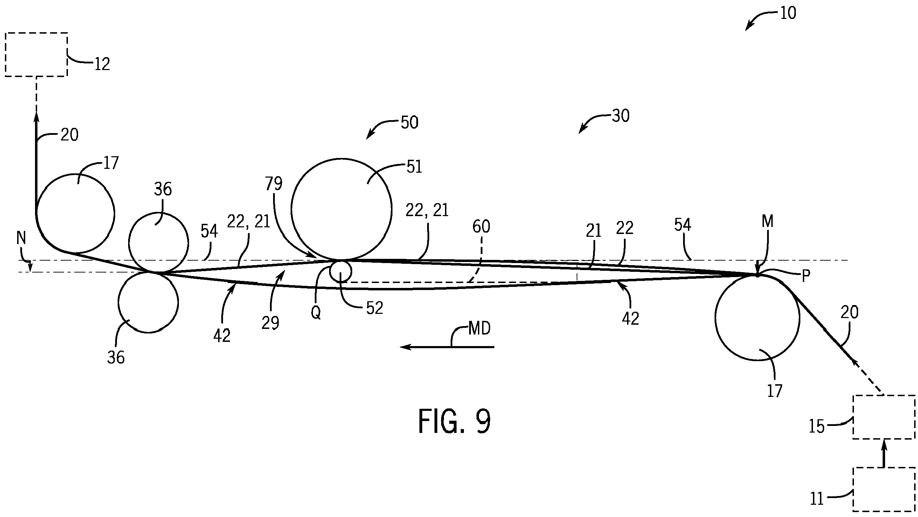

Figs. 1-2 depict an example sealing station 30 of the present disclosure which is part of an example machine 10 of the present disclosure. The machine 10 can include other sections or stations 11, 12, 15 (schematically depicted on Fig. 9) upstream and/or downstream from the sealing station 30 (e.g., input station, output station, cutting station, folding station 15). Note that the machine 10 defines a machine direction (see arrow MD that longitudinally extends along the machine 10) which is the direction the web 20 is conveyed from upstream to downstream through the machine 10. The cross directions (see arrows CD), as referred to herein below, are opposing directions that are transverse (e.g., perpendicular) to the machine direction MD. Note that while some of the features of the machine 10 are described hereinbelow with certain spatial relation to each other (e.g., vertically spaced, longitudinally offset), these spatial relationships are not intended to limit the orientation of the machine 10 or components thereof to any specific limiting orientation. For instance, the machine 10 can be inverted or the machine direction can be vertically orientated in contrast to the orientation of the machine direction and the machine 10 depicted in the Figures of the present disclosure depending on the specific application of the machine 10.

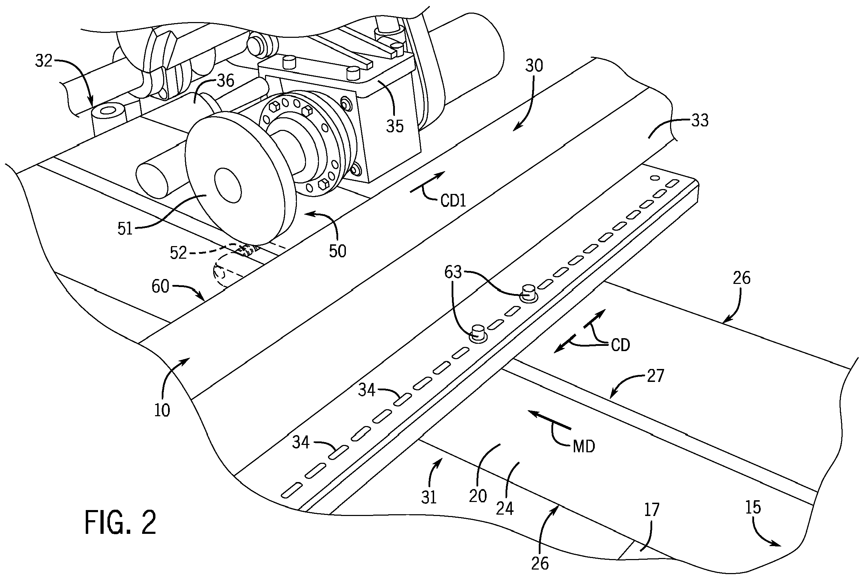

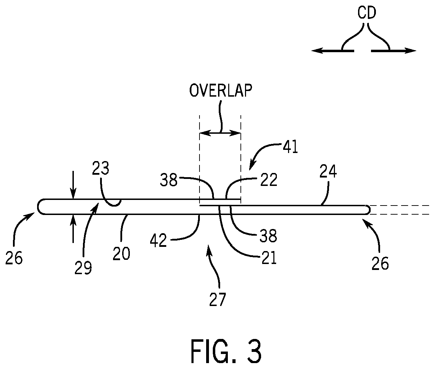

The machine 10 includes a folding station 15 that folds opposing sides 21, 22 of the web 20 toward each other in the cross directions CD such that the sides 21, 22 (Fig. 3) overlap each other. Note that the folding station 15 is not fully depicted in Figs. 1-2, however, Fig. 2 depicts the approximate location of the folding station 15. The folding station 15 can include any suitable folding components such as plates, angles, and blocks that are configured to fold the web 20. In one example, the folding station 15 includes a folding component on each side of the web 20 such that as the web 20 is conveyed along the folding components the sides of the web are folded inwardly in the cross directions toward the center of the web 20. In one example, the web 20 enters the folding station as a planar sheet and exits the folding station (after the folding components fold the sides the web 20) with a shape of a continuous tube (see Fig. 3) and an oblong cross section.

Fig. 3 depicts a cross-sectional view of the web 20 as the web 20 is conveyed downstream from the folding station 15. The now folded web 20 is in the shape of a continuous tube (e.g., the web 20 has a tubular shape and a generally oblong cross section; see Fig. 3). The sides 21, 22 overlap each other (see also Fig. 3) and are part of a first web section 41 of the web 20 in which the lap seal is formed. The web 20, when in the shape of a continuous tube, includes a second web section 42 that is opposite the first web section 41. A portion of the inside surface 23 of the web 20 overlaps or is adjacent to a portion of the outside surface 24. Note that in certain examples, the second side 22 is on top of the first side 21, as depicted in Fig. 3. However, in other examples, the machine 10 can be configured such that the first side 21 is on top of the second side 22

A roller system having one or more rollers 17 (Figs. 2 and 9) conveys the folded web 20 downstream in the machine direction MD from the folding station 15 through the sealing station 30. The roller system can include idle rollers, guide rollers, tension rollers, drive rollers, driven rollers, or other rollers known in the art that collectively convey and support the web 20 in the machine 10. The roller system can be configured to maintain tension in the web 20 as the web 20 is conveyed through the sealing station 30. Note that other rollers (not depicted) of the roller system can be positioned in the sealing station 30 and/or other stations upstream and/or downstream from the sealing station 30.

The sealing station 30 is configured to form a lap seal in the web 20 by sealing the overlapping sides 21, 22 of the web 20 to each other. Referring to the example web 20 depicted in Fig. 3, the inside surface 23 near the second side 22 of the web 20 is sealed to the outside surface 24 near the first side 21 of the web 20. The lap seal is formed in the web 20 using an ultrasonic sealer 50 that applies ultrasonic energy, vibration energy, and/or compression forces to the web 20 to thereby form the lap seal in the web 20, as described further herein.

The sealing station 30 has an upstream input first end 31 that receives the web 20 from the folding station 15 and an opposite downstream output second end 32 that dispenses the web 20 having the lap seal formed therein. A first frame 33 extends in the cross directions CD and is vertically spaced apart from the web 20. The first frame 33 is for vertically supporting an arm assembly 60 relative to the web 20, and the arm assembly 60 holds an anvil 52 of the ultrasonic sealer 50. In certain examples, the arm assembly 60 is a cantilever that is coupled at one end to the first frame 33 and the other opposite end (e.g., the end that holds the anvil 52) is freely suspended. The first frame 33 includes one or more mounting holes 34 such that the arm assembly 60 may be mounted to the first frame 33 and is movable in the cross directions CD. Note that in other examples the first frame 33 may have a rail with a channel (not depicted) that facilitates cross-directional movement of the arm assembly 60 along the first frame 33. In other examples, the arm assembly 60 is coupled to the first frame 33 via dovetail wedges, linear rails, and/or shaft slides. Note that in certain examples the arm assembly 60 and/or the horn 51 can be manually moved by an operator or automatically moved by actuators (not depicted) of the machine 10.

A second frame 35 is positioned downstream in the machine direction MD from the first frame 33. The second frame 35 is for vertically supporting a horn 51 of the ultrasonic sealer 50 relative to the web 20 and the anvil 52 that is held by the arm assembly 60. The second frame 35 and/or the horn 51 are movable in the cross directions CD, and in one example, the second frame 35 and/or the horn 51 are moved in a first cross direction CD 1 (Fig. 2) such that the horn 51 is vertically aligned with the anvil 52. Note that Fig. 1 depicts the second frame 35 having frame components that couple to and support the horn 51 relative to the web 20 and the anvil 52. These frame components are offset from the horn 51 in the first cross direction CD1 and/or vertically offset from the horn 51. A pair of finishing rollers 36 are positioned downstream from the second frame 35, and the finishing rollers 36 are for finishing the lap seal as described hereinbelow.

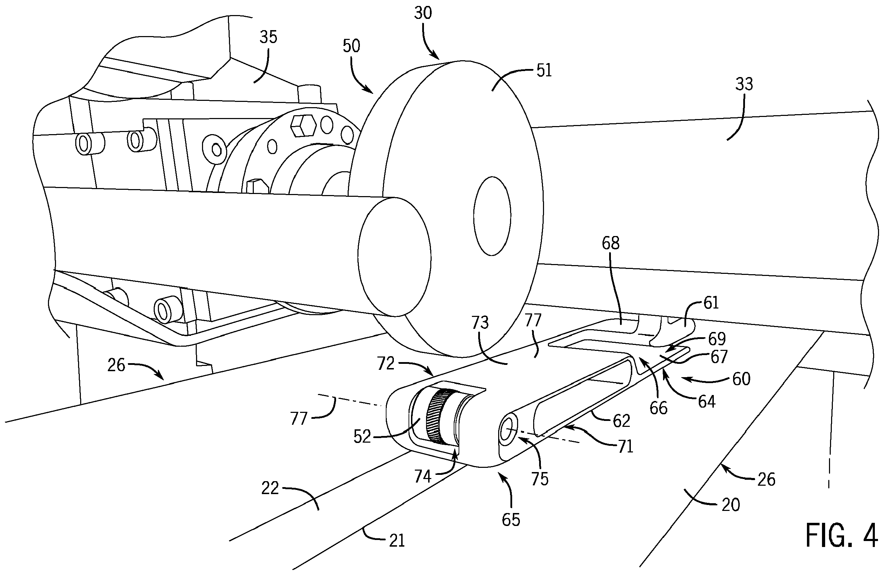

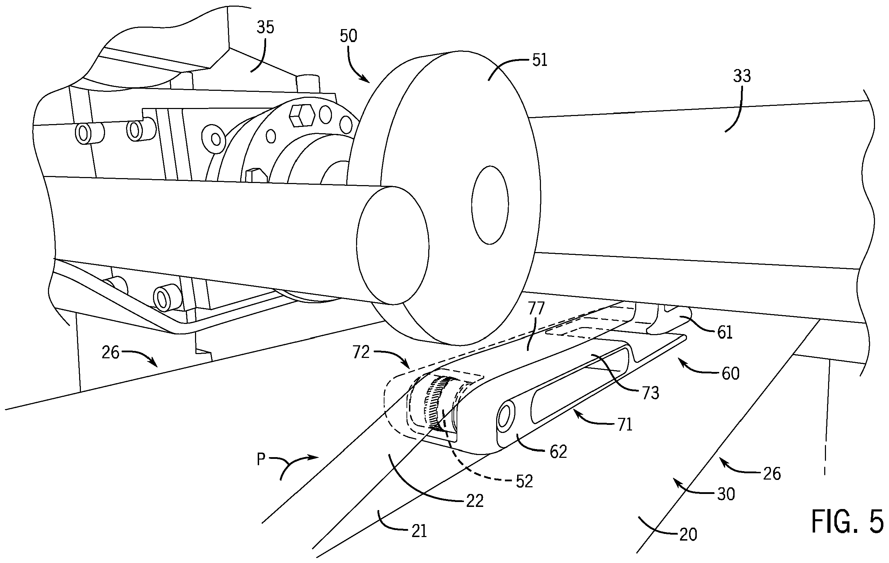

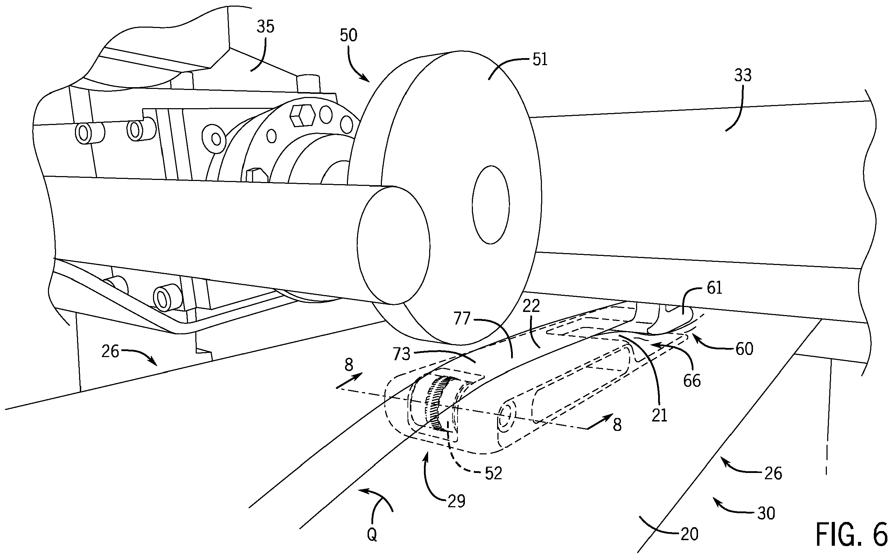

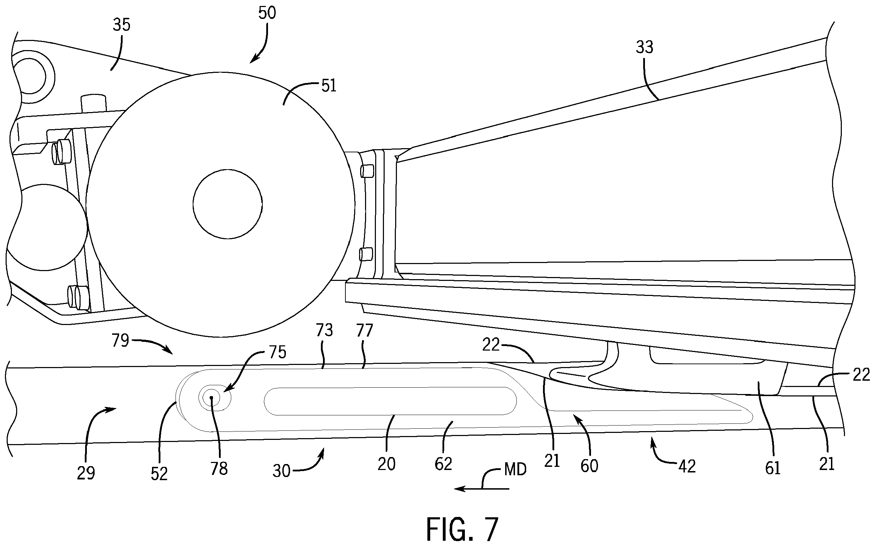

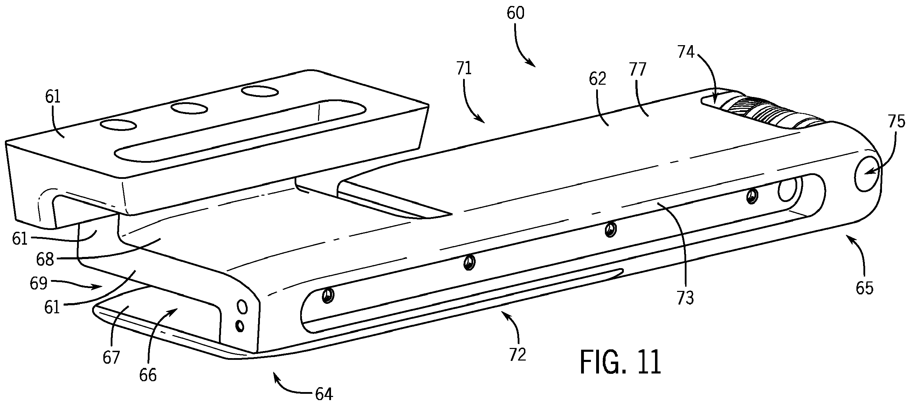

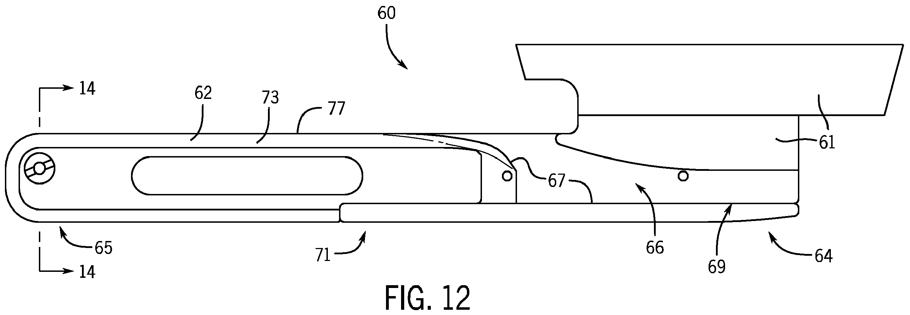

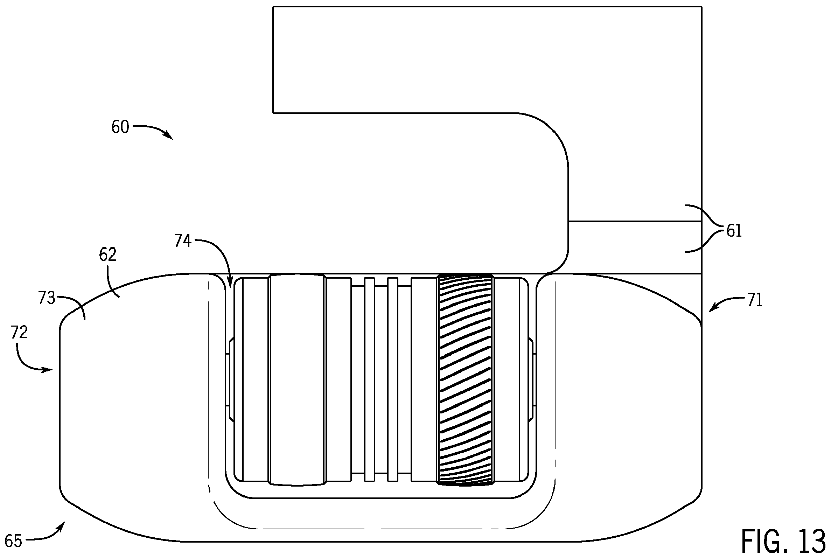

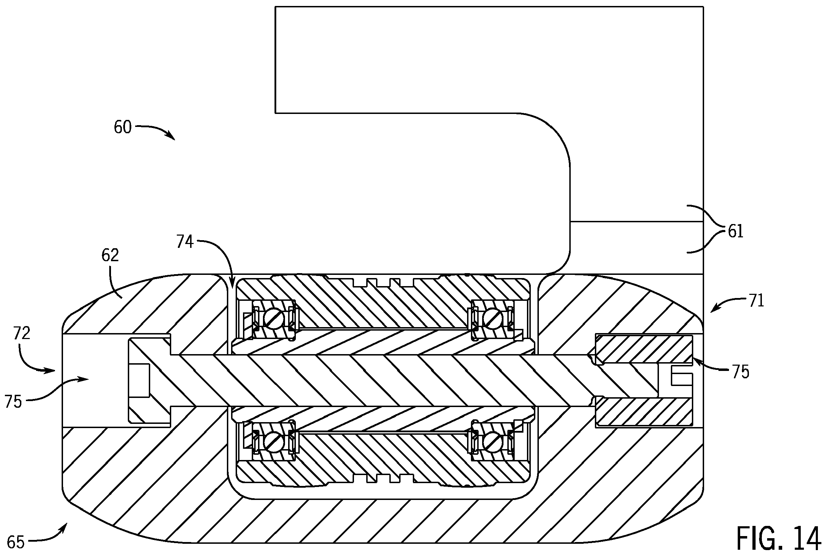

Referring now to Figs. 4-8, the arm assembly 60 includes a first arm 61 that is removably coupled to the first frame 33 and a second arm 62 that extends transversely to the first arm 61 and in the machine direction MD. Fig. 4 depicts the web 20 disengaged from the arm assembly 60, Fig. 5 depicts the web 20 partially engaging the arm assembly 60, and Fig. 6 depicts the web 20 fully engaging the arm assembly 60 such that the anvil 52 is within a void 29 (Fig. 7) defined by the web 20. Figs. 4-8 and the interaction between the web 20 and the arm assembly 60 are described in greater detail hereinbelow. Note also that while Figs. 4-8 depicts a large space between the horn 51 and the anvil 52 so that features and components of the arm assembly 60 are clearly depicted, the space between the horn 51 and the anvil 52 can vary (e.g., 1.0 millimeter between the horn 51 and the anvil 52, 8.0 millimeters between the horn 51 and the anvil 52) and may be based on various factors (e.g., web thickness, pattern on the anvil 52) during setup and operation of the machine 10. Further note that the Figs. 11-14 depict a similar example arm assembly 60 isolated from the machine 10 and the web 20.

The first arm 61 is cantilevered from the first frame 33 toward the web 20 and can includes a portion that generally extend in the machine direction MD. As such, in certain examples the arm assembly 60 is a cantilever that is coupled to the first frame 33 via the first arm 61 The first arm 61 includes one or more fasteners 63 (see Fig. 2) for coupling the first arm 61 to the first frame 33. The fasteners 63 can be any suitable component such as clamps or threaded nuts and bolts. The fasteners 63 are removed such that an operator can move the first arm 61 and the arm assembly 60 in one of the cross directions CD along the first frame 33 and recouple the first arm 61 to the first frame in a desired position that corresponds to a desired position of the anvil 52. In certain examples, the machine 10 includes one or more actuators that move the arm assembly 60 relative to the first frame 33. In these examples, the operator may not need to manually engage the arm assembly 60 and/or any fasteners 63 to move the arm assembly 60.

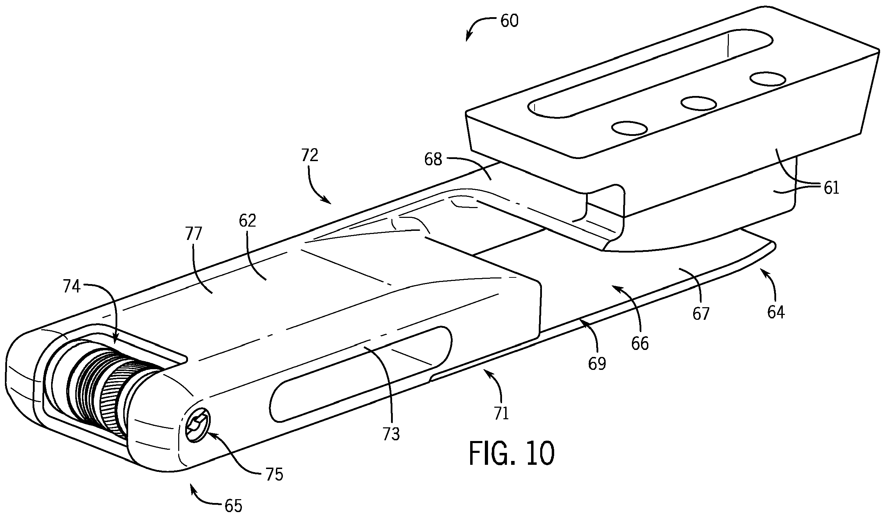

The second arm 62 is coupled to and cantilevered from the first arm 61 and extends in the machine direction MD along the web 20. Specifically, the second arm 62 has an input first end 64 coupled to the first arm 61 and an opposite second end 65 downstream from the first end 64 in the machine direction MD. The second arm 62 includes a first side 71, an opposite second side 72, and a body 73. A channel 66 is defined near the first end 64 of the second arm 62 and an opening 69 is defined in the first side 71 of the second arm 62. Note that a guide surface 67 at least partially defines the channel 66 and is spaced apart from the first arm 61 (see Figs. 4 and 10). During operation of the machine 10 (described further herein), the first side 21 of the web 20 is conveyed in the machine direction MD through the opening 69 and the channel 66 and further along the upper surface 77 of the body 73. Note that the guide surface 67 is spaced apart from the first arm 61 (see Fig. 4).

The first arm 61 is connected to the second side 72 of the second arm 62 (see Fig. 4) via a coupling section 68 of the second arm 62. The coupling section 68 is at the first end 64 of the second arm 62. During operation of the machine 10, the second side 22 of the web 20 is conveyed the machine direction MD along the coupling section 68 and further along the upper surface 77 of the body 73.

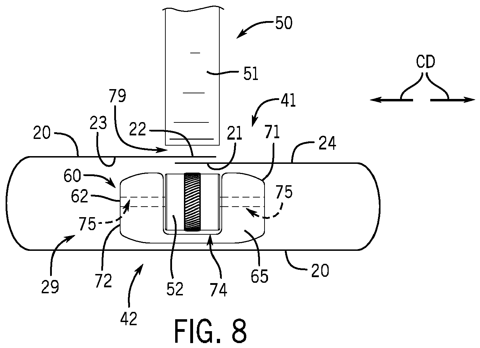

The second end 65 of the second arm 62 includes a cutout 74 (see Fig. 8) in which the anvil 52 is received and held. Bores 75 (Fig. 4) extend between the sides 71, 72 of the second arm 62 and the cutout 74 such that a shaft, pin, or rod (not depicted) can be inserted through the bores 75, the channel 66, and the anvil 52. As such, the pin or rod couples the anvil 52 to the second arm 62 and permits the anvil 52 to rotate about an axis 78 (Figs. 4 and 7) that extends through the center of the bores 75. The shaft, pin, or rod can be removed such that operator can replace the anvil 52 with a different anvil 52. For example, the anvil 52 may be replaced with a different anvil 52 having a different a sealing pattern or profile, as will be further described herein. Note that in other examples, the anvil 52 does not rotate (e.g., anvil 52 is stationary relative to the second arm 62).

Note that in certain examples the anvil 52 may generate heat during operation (e.g. frictional forces between the anvil 52 and the web 20 may be generated with heat), and thus, there may be a need to cool the anvil 52 to thereby ensure that the lap seal is properly formed in the web 20. That said, the body 73 of the second arm 62 is in close proximity to the anvil 52 and/or coupled to the anvil 52 via the pin and acts as a heat sink for the anvil 52. As such, heat may flow from the anvil 52 to the second arm 62 and the second arm 62 may include one or more cooling components that are configured to remove or dissipate the heat the second arm 62 receives from the anvil 52. In one example, the cooling components are channels extending along the exterior surface of the second arm 62 through which air flows to cool the second arm 62. In other example, the cooling components are conduits in the second arm 62 through which air or a fluid is conveyed to thereby cool the second arm 62. In one instance, the air is compressed air supplied from an air pump (not depicted).

Now referring specifically to Fig. 9, the arm assembly 60 is depicted in dashed lines and the sides 21, 22 and the second web section 42 is depicted in solid lines. The lap seal is formed in the web 20 along a sealing plane 54 that is depicted as a dash-dot line in Fig. 9. Also note that the outer circumference of the roller 17 upstream from the sealer 50 is offset from the sealing plane 54 in a first direction (see arrow M) and the outer circumference of the upper finishing roller 36 is offset from the sealing plane 54 in the first direction (see arrow N).

As noted above, the web 20 is conveyed in the machine direction MD through the sealing station 30 where the lap seal is formed in the web 20. As the web 20 is conveyed along the arm assembly 60, the each side 21, 22 and the second web section 42 of the web 20 are simultaneously conveyed along separate paths that extend between the upstream roller 17 (see point P) and the horn 51 and the anvil 52 (see point Q). Specifically, the first side 21 is conveyed along a first path, the second side 22 is conveyed along a second path, and the second web section 42 is conveyed along a third path. In certain examples, the length of the first side 21 of the web 20 in the machine direction MD within the first path equals the length of the second side 22 of the web 20 in the machine direction MD within the second path and equals the length of the second web section 42 in the machine direction MD within the third path such that the lap seal is properly formed by the sealer 50 and these components (the first side 21, the second side 22, and the second web section 42 of the web 20) are not offset relative to each other when the lap seal is formed in the web 20. If the lengths of the first side 21 in the first path, the second side 22 in the second path, and/or the second web section 42 in the third path are not equal, the lap seal may not be properly formed in the web 20 and the web 20 could include wrinkles, folds, or other undesirable features that negatively impact the lap seal strength and/or aesthetic look of the bags. As such, the surfaces and curved edges of the arm assembly 60 are designed in such a way that the lengths of the first side 21 in the first path and the second side 22 in the second path are equal to each other.

Referring back to Figs. 4-6, an example operational sequence for properly placing the web 20 around the arm assembly 60 and through the sealer 50 is described below. Fig. 4 depicts the web 20 disengaged from the arm assembly 60 and extending between rollers (e.g., rollers 17 on Fig. 9) at the upstream end 31 and the downstream end 32 of the sealing station 30. The web 20 is in the flattened continuous tube shape depicted in Fig. 3. Referring to Fig. 5, to place the web 20 into engagement with the arm assembly 60, the operator first stops the conveyance of the web 20 and then the operator pulls the second side 22 of the web 20 around the second side 72 of the second arm 62 (see arrow P on Fig. 5). As such that the second side 22 of the web 20 extends along the body 73 of the second arm 62 and the second arm 62 and the anvil 52 are partially within the void 29 defined by the folded web 20 (see also Figs. 3 and 8). Note that Fig. 5 depicts the portions of the arm assembly 60 covered by the second side 22 of the web 20 in dashed lines.

The operator then similarly pulls the first side 21 of the web 20 around the first side 71 of the second arm 62 (see arrow Q on Fig. 6) such that the first side 21 of the web 20 extends through the channel 66 and the opening 69 and the along the guide surface 67 and the upper surface 77, as depicted in Fig. 6. As such, the second arm 62 and the anvil 52 are within the void 29 and the web 20 is in proper engagement with the arm assembly 60 for forming the lap seal in the web 20 (see also Fig. 8). Note that Fig. 6 depicts the portions of the arm assembly 60 covered by the sides 21, 22 of the web 20 in dashed lines. Further note that the sides 21, 22 can be in a first orientation relative to each other in which the second side 22 is closer to the horn 51 than the first side 21 (see Fig. 8) or an alternative second orientation in which the first side 21 is closer to the horn 51 than the second side 22. The first orientation or the second orientation is selected by the operator and the selection may be dependent on the material properties of the web 20.

When the operator restarts the machine 10, the sides 21, 22 of the web 20 are conveyed along the second arm 62 while the second arm 62 and the anvil 52 remains within the void 29 (e.g., the web 20 passes around the second arm 62 and the anvil 52). Fig. 7 depicts the interaction of the web 20 with the arm assembly 60 while the web 20 is being conveyed in the machine direction MD. The portions of the arm assembly 60 covered by the web 20 is depicted in thin, solid lines, and the horn 51 is spaced apart from the web 20 for clarity.

Referring now to Fig. 8, an end view of the second arm 62, the anvil 52, and the horn 51 is shown. Note that line 8-8 on Fig. 6 is the approximate location of the end view depicted in Fig. 8. Also note that Fig. 8 depicts the web 20 spaced apart from the horn 51 and the anvil 52, however, in operation, there is less space between these components or just enough space to between these components to allow the sides 21, 22 of the web 20 to pass therethrough. In certain examples, the horn 51 is moved into a position relative to the anvil 52 by an actuator (not depicted) such as a servo motor. The distance between the outer perimetral surface of the horn 51 and the outer perimetral surface of the anvil 52 can vary, and in certain examples, the distance between the outer perimetral surfaces of the horn 51 and the anvil 52 is dependent on the thickness of the web 20 and the material parameters (e.g., thickness) of the lap seal formed in the web 20. In certain examples, the horn 51 and/or the anvil 52 can be incrementally moved toward each other to thereby position the horn 51 and the anvil 52 relative to each other. In one example, the spacing or distance between the horn 51 and the anvil 52 (e.g., the vertical height of the nip defined between the horn 51 and the anvil 52) is selected by the operator based on any number of factors such as web thickness, web material, and/or desired lap seal parameters (e.g., lap seal thickness, desired seal strength) and the spacing remains constant while the machine 10 is operating.

In another example, the spacing between the horn 51 and the anvil 52 may be automatically and/or dynamically changed while the web 20 is being conveyed through the nip to thereby maintain a desired pressure on the web 20 to properly form the lap seal. Automatically and dynamically changing the spacing accounts for material variations in the web 20 (e.g., thickness variations) such that the lap seal is properly formed in the web. In this example, a sensor (not depicted) is configured to sense the pressure exerted by the horn 51 and the anvil 52 on the web 20. An actuator (not depicted; e.g., a pneumatic piston, servo motor) coupled to the anvil 52 is controlled by a controller (described further herein) based on signals received from the sensor and the actuator moves the horn 51 relative to the anvil 52 to thereby maintain the desired pressure on the web 20.

The horn 51 and the anvil 52 define a nip 79 therebetween through which the sides 21, 22 and the first web section 42 are conveyed. As the sides 21, 22 of the web 20 are conveyed through the nip, the horn 51 and the anvil 52 compress the sides 21, 22 therebetween (note that Fig. 8 depicts the sides 21, 22 spaced apart from each other for clarity). The horn 51 and the anvil 52 thereby cooperate to form the lap seal in the web 20. In one example, the horn 51 and the anvil 52 form the lap seal by sealing the inside surface 23 near the second side 22 of the web 20 to the outside surface 24 near the first side 21 of the web 20. The horn 51 and the anvil 52 rotate relative to each other and continuously form the lap seal in the web 20 as the web 20 is continuously conveyed through the nip. As such, the lap seal in the web 20 extends in the machine direction MD downstream from the sealer 50. In certain examples, the horn 51 and/or the anvil 52 can be rotated by an actuator (e.g., motor). In other examples, the web 20 rotates the horn 51 and/or the anvil 52 as the web 20 is conveyed therebetween.

The horn 51 receives ultrasonic energy from an ultrasonic energy generator or source (not depicted) such that the horn 51 vibrates. The vibration of the horn 51 relative to the anvil 52 imparts energy into the sides 21, 22 of the web 20 as it is conveyed between the horn 51 and the anvil 52. The anvil 52 can include a pattern that imparts a pattern into the lap seal (e.g., the size and shape of the lap seal) formed in the web 20. However, in other examples, the anvil 52 does not have a pattern and instead the outer perimetral surface of the anvil 52 is smooth. Note that in certain examples, the application of the ultrasonic energy via the horn 51 to the web 20 melts portions of the web 20 which fuse or seal together to form the lap seal in the web 20. In one example, the application of ultrasonic energy via the horn 51 to the web 20 causes the inside surface 23 and the outside surface 24 to melt such that the melted material fuse to each other and the lap seal is formed in the web 20. In certain examples, the application of the ultrasonic energy is configured such that the surfaces 38 (Fig. 3) opposite the inside surface 23 and the outside surface 24 do not inadvertently couple to other surfaces of the web 20. For instance, these surfaces 38 do not adhere to the second web section 42.

Also note that by cantilevering the second arm 62 and the anvil 52 into the void 29 defined by the web 20 via the first arm 61 and the first frame 33, the second web section 42 (see Fig. 3) remains separate from the lap seal. That is, the second arm 62 and the anvil 52 maintain separation between the second web section 42 and the sides 21, 22. Note that in certain examples, the second arm 62 and the anvil 52 are vertically spaced above the second web section 42. A person of ordinary skill in the art will recognize that if the anvil 52 was located outside the void 29, the sealer 50 may inadvertently form the lap seal between the first web section 41 (e.g., the sides 21, 22) and the second web section 42. To avoid this potential problem, the anvil 52 is positioned within the void 29 formed by the web 20.

Optionally, after the lap seal is formed in the web 20, finishing rollers 36 (see Fig. 9) define a nip through which the web 20 with the lap seal is conveyed. The finishing rollers 36 are configured to compress the lap seal therebetween to thereby finish the lap seal (described hereinbelow).

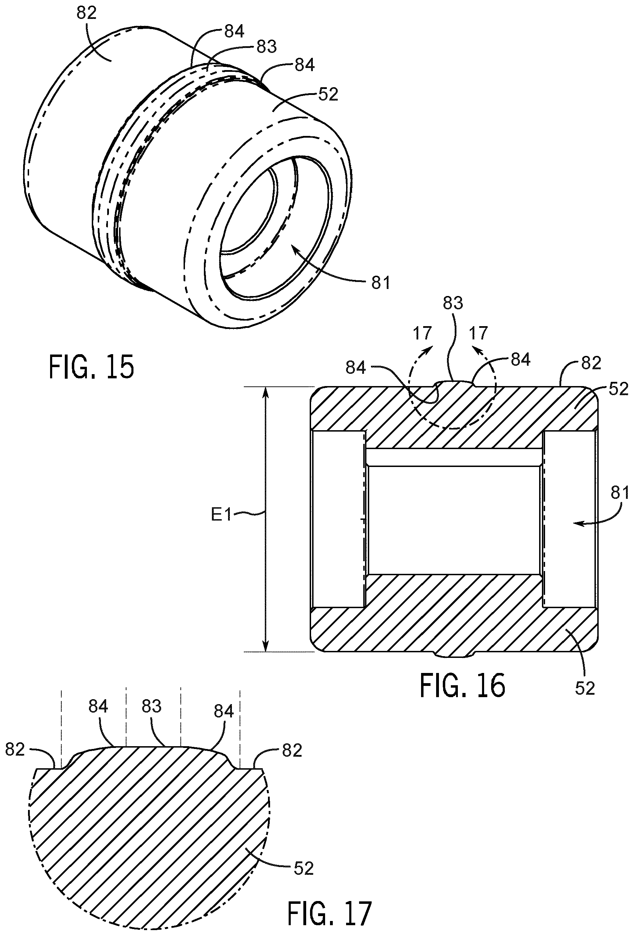

Referring now to Figs. 15-24, example anvils 52 are depicted. Each anvil 52 has a center bore 81 and one or more surfaces extending along the circumference of the anvil 52. The anvil 52 has an exterior surface 82 and a sealing surface 83, the sealing surface 83 being raised relative to the exterior surface 82. The sealing surface 83 at least partially defines the size and shape of the lap seal formed in the web 20 as the horn 51 and the anvil 52 cooperate to form the lap seal (as noted above). Transition surfaces 84 extend between the exterior surface 82 and the sealing surface 83, and the transition surfaces 84 provide a smooth transition between the exterior surface 82 and the sealing surface 83. The transition surfaces 84 advantageously prevent tears, scores, cuts, or ruptures in the web 20 as the lap seal is formed in the web 20. The transition surfaces 84 can further smooth the surfaces 23, 24 of the web 20 near the lap seal.

The outer diameter E1 of the anvil 52 varies, and the outer diameter E1 may be based on the application of the machine 10, the specific material characteristics of the web 20, the desired characteristics of the lap seal, and/or the location of the lap seal in the web 20. In one example, the outer diameter of the anvil 52 is 0.9843 inches. In another example, the outer diameter of the anvil 52 is 1.9685 inches. The outer diameter may range from 0.10 inches to 4.0 inches and is preferably between 0.8 inches and 2.5 inches. In certain examples, an anvil 52 with a small outer diameter may be used with the lap seal is formed near the outer edge of the web 20. In other examples, an anvil with a large outer diameter may be used to form the lap seal near the center of the web 20 (see Fig. 2 which depicts the outer edges 26 and the center 27 of the web 20).

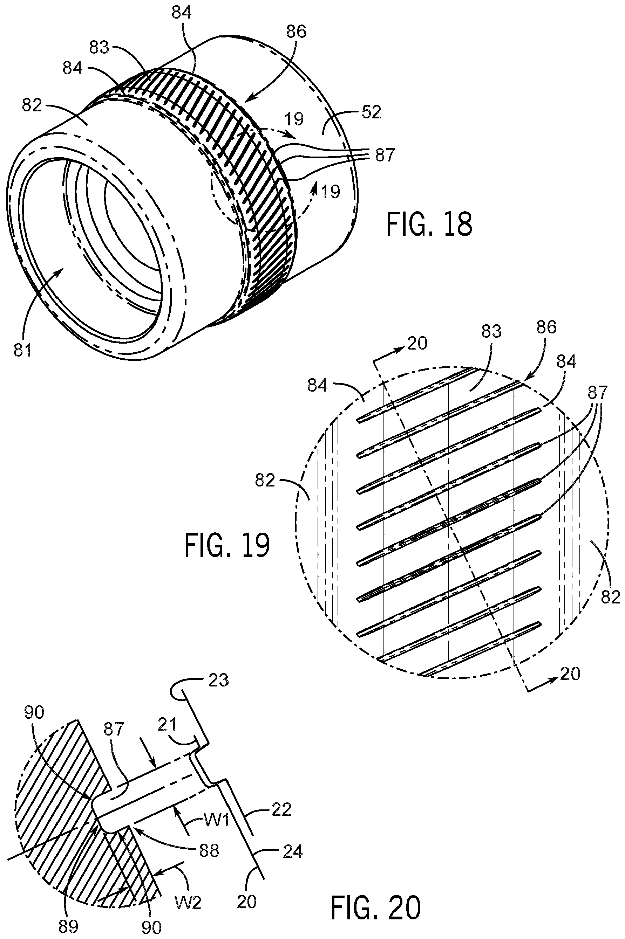

Referring specifically to Figs. 18-20, an example pattern 86 is included on the anvil 52 and is for forming the lap seal in the web 20. The pattern 86 includes grooves 87 recessed into the sealing surface 83 and the transition surfaces 84. The grooves 87 are arranged in a "hatching" pattern. As ultrasonic energy is applied to the surfaces 23, 24 via the horn 51, the web 20 melts (as noted above) and the melted materials flow into the grooves 87. As the web 20 and the lap seal are conveyed downstream from the horn 51 and the anvil 52, the anvil 52 rotates such that the material in the grooves 87 moves with the lap seal (e.g., the material in the grooves 87 exits the grooves 87 and is part of the lap seal). As such, the lap seal includes material arranged in a pattern that corresponds to the pattern 86 of the anvil 52. See Fig. 20 which depicts the web 20 with a pattern that corresponds to the groove 87. Note that the sides 21, 22 of the web 20 and the groove are spaced apart from each other for clarity.

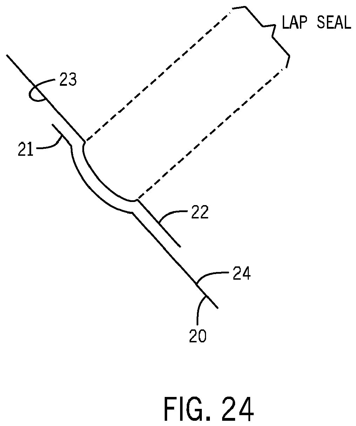

In certain examples, the finishing rollers 36 are configured to compress the lap seal having a pattern (as noted above with respect to Figs. 18-20) therein. In this example, the portions of the web 20 that were melted to form the lap seal are still malleable and thus, the finishing rollers 36 compress these materials (e.g., the materials are squeezed and squished) into a more generally flat and smooth profile (see Fig. 24). In certain examples, the lap seal is a non-breathable or lockup seal.

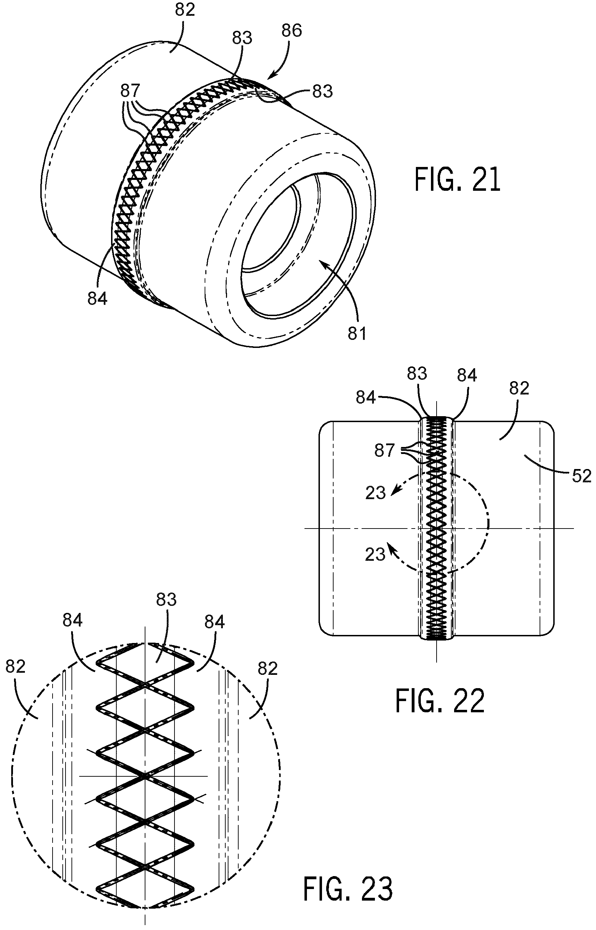

Figs. 21-23 depict another example pattern 86 according to the present disclose in which the grooves 87 cross each other and the grooves 87 are in a diamond or "X" pattern. In certain examples, the anvil 52 has multiple patterns 86 side-by-side along the exterior circumference of the anvil 52. Thus, a single anvil can be used to form different lap seals in the web 20. The anvil 52 can be "flipped" or the anvil 52 can be moved in the cross direction CD to thereby change the lap seal formed in the web 20. In certain examples, the anvil 52 has one or more annular channels (not depicted) that permit air to flow along the anvil 52 and thereby cool the anvil 52. The annular channels could also receive bands or O-rings.

Note that in certain examples, the sealer 50 may cause certain portions of the web 20 to also melt into the portions of the grooves 87 that are defined in the transition surfaces 84 and/or further flow or "ooze" in a cross direction CD. In this example, the material that melts into the transitions surfaces 84 helps to form a transition zone in the lap seal next to the adjacent unsealed web 20. This transition zone reduces or minimizes stress points between the lap seal and the adjacent unsealed web 20 to thereby reduce or minimize inadvertent tearing of the lap seal from the adjacent unsealed web 20. The finishing rollers 36 can compress the material in the transition zone to thereby create a flatter or smoother profile of the transition zone.

The shape, width, and/or the depth of the grooves 87 can vary and have any width or depth. Note that Fig. 20 depicts the web 20 spaced apart from the groove 87 for clarity and portions of the web 20 are depicted spaced apart from each other for clarity. For example, the grooves 87 can be linear or curved. The width W1 (Fig. 20) of the grooves 87 can be in the range of 0.001 to 0.020 inches, and in one example, the width W1 is 0.008 inches. The depth W2 (Fig. 20) of the grooves 87 can be in the range of 0.0001 to 0.0010 inches, and in one example, the depth W2 is 0.004 inch. Note that in certain examples, the width W1 may correspond to a radius of the groove 87. The groove 87 has a top 88 and bottom 89 and rounded edges 90 near the bottom 98. As such, the width and/or the depth of the groove may vary (e.g., the groove 87 has a width of 0.008 inches at top 88 and a width of 0.004 at the bottom 89). Note that while grooves 87 are described hereinabove, the pattern 86 can include raised or recessed dots and/or other shapes based on the lap seal to be formed in the web 20. Further note that in certain examples, the pattern 86 can exclude grooves.

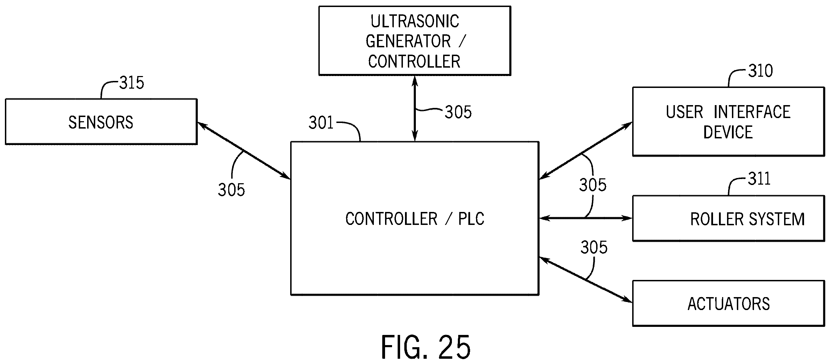

Fig. 25 depicts an example control system 300 of the machine 10. The control system 300 is for controlling operation of the machine 10 and the various components and features noted above. The control system 300 includes a controller 301 with a memory and a processor. The controller 301 is in communication with various components of the machine 10 via wired or wireless communication links 305. The controller 301 receives inputs from a user interface device 310 that is configured to permit an operator to enter data into the system 300. The operator may enter data related to the materials forming the web 20, the ultrasonic energy that must be applied to the horn to form the seal, the speed of the machine 10, and the like. The controller 301 is also in communication with a roller system 311 or conveyor that conveys the web 20 and the actuators noted above. One or more sensors 315 are also in communication with the controller 301 and configured to send data to the controller 301. In some examples, mechanical adjustments determine the distance between the horn 51 and the anvil 52. In one example, a sensor 315 will sense the presence of web in machine 10, communicate that to the controller 301, which will allow the ultrasonic generator to run. In another example, a sensor internal to the ultrasonic generator/controller is configured to sense ultrasonic energy and/or vibration being output by the horn 51 or pressure and send horn output data. If the horn output data is less than a threshold output necessary to form the desired seal, the controller 301 communicates with an ultrasonic energy generator to increase the ultrasonic energy provided to the horn 51 and thereby increase the ultrasonic energy, vibration, and/or pressure applied by the horn 51 to the web 20. In one example, the controller 301 is configured to stop the machine 10 if a sensor 315 senses that a layer or side of the web 20 is absent.

In certain examples, a machine forms a web into bags or pouches. The machine includes a sealing section through which the web is conveyed in a machine direction. The sealing section is configured to form a lap seal in the web, and the web has a first web section and a second web section. An input end is configured to receive the web. An ultrasonic sealer has a horn and an anvil defining a nip therebetween through which the first web section passes. The ultrasonic sealer is configured to form the lap seal in the first web section, and the anvil is positioned between the first web section and the second web section. An output end is configured to dispense the web with the lap seal formed therein.

In certain examples, the first web section includes opposing sides of the web that overlap each other. In certain examples, the web is continuously conveyed through the sealing section and the ultrasonic sealer continuously forms the lap seal in the web. In certain examples, the web received via the input end has a tubular shape with an oblong cross section and a void defined between the first web section and the second web section. The anvil is in the void and each of the first web section and the second web section each pass along opposite sides of the anvil.

In certain examples, the web is conveyed in a machine direction through the machine and the machine includes a folding station upstream from the sealing station. The folding station is configured to fold each side of the web in opposite cross directions such that the sides the web overlap each other, and the first web section includes the overlapping sides of the web. In certain examples, the folding station is configured to fold the web into a tubular shape. In certain examples, the folding station is configured to fold the web such that a void is defined by the web, and the anvil is positioned in the void.

In certain examples, the web defines a void between the first web section and the second web section, and as the web is conveyed through the sealing section, the anvil is in the void and the first web section and the second web section pass along opposite sides of the anvil. In certain examples, the sealing section includes a frame that extends in a cross direction that is transverse to the machine direction, and the frame cantilevers the anvil into the void. For example, the arm assembly is a cantilever mounted on the first frame and the arm assembly cantilevers the anvil into the void.

In certain examples, the machine includes a roller system configured to convey the web in the machine direction. In certain examples, the web is conveyed in a machine direction through the machine and the sealing section further includes an arm assembly configured to extend in the machine direction such that the arm assembly extends between the first web section and the second web section to thereby hold the anvil. In certain examples, the sealing section can include a frame extending in a cross machine direction and being spaced apart from the web such that the frame supports the arm assembly relative to the web.

In certain examples, a machine forms a web into bags or pouches. The web is folded with a first side and an opposite second side of the web overlapping each other such that the web has a first web section comprising the first side and the second side, an opposite second web section, and a void defined between first web section and the second web section. The machine includes an ultrasonic sealer having a horn and an anvil that are collectively configured to form a lap seal in the first web section as the web is conveyed through the machine in a machine direction. A frame extends in a cross direction transverse to the machine direction and is spaced apart from the web. An arm assembly is coupled to the frame and is cantilevered into the void to thereby support the anvil in the void between the first web section and the second web section.

In certain examples, the web has an oblong cross section. In certain examples, the arm assembly is movable in the cross direction along the frame such that the anvil is repositionable relative to the horn. In certain examples, the arm assembly defines a first arm that is coupled to the frame, a second arm that extends in the machine direction and holds the anvil, and a channel between the first arm and the second arm. The web is conveyed in the machine direction along the arm assembly such that the first side of the web passes through channel. In certain examples, the first side of the web is conveyed along a first path along the arm assembly and the second side of the web is conveyed along a second path along the arm assembly before the lap seal is formed in the web. In certain examples, the arm assembly has a first arm that is coupled to the frame and a second arm that extends in the machine direction and holds the anvil. The second arm includes a cooling component configured to cool the arm and thereby cool the anvil.

In certain examples, a machine creates bags from a web have a first web section and a second web section. The machine comprises a sealing section through which the web is conveyed, the sealing section having an ultrasonic sealer with a horn and an anvil defining a nip therebetween through which the first web section passes such that the ultrasonic sealer is configured to form a lap seal therein, and wherein the anvil is positioned between the first web section and the second web section.

In certain examples, the web is continuously conveyed through the sealing section in a machine direction such that the horn and the anvil continuously form the lap seal in the first web section.

In certain examples, the machine further comprises a roller system that is configured to convey the web through the sealing section.

In certain examples, the sealing section includes a frame from which the anvil is cantilevered such that the anvil is positioned between the first web section and the second web section.

In certain examples, the machine further comprises a folding section upstream of the sealing section, wherein the folding section is configured to fold the web such that the first web section is opposite the second web section and the web has a tubular shape.

Citations to a number of references are made herein. The cited references are incorporated by reference herein in their entireties. In the event that there is an inconsistency between a definition of a term in the specification as compared to a definition of the term in a cited reference, the term should be interpreted based on the definition in the specification.

In the present description, certain terms have been used for brevity, clarity, and understanding. No unnecessary limitations are to be inferred therefrom beyond the requirement of the prior art because such terms are used for descriptive purposes and are intended to be broadly construed. The different apparatuses, systems, and method steps described herein may be used alone or in combination with other apparatuses, systems, and methods. It is to be expected that various equivalents, alternatives, and modifications are possible within the scope of the appended claims.

The functional block diagrams, operational sequences, and flow diagrams provided in the Figures are representative of exemplary architectures, environments, and methodologies for performing novel aspects of the disclosure. While, for purposes of simplicity of explanation, the methodologies included herein may be in the form of a functional diagram, operational sequence, or flow diagram, and may be described as a series of acts, it is to be understood and appreciated that the methodologies are not limited by the order of acts, as some acts may, in accordance therewith, occur in a different order and/or concurrently with other acts from that shown and described herein. For example, those skilled in the art will understand and appreciate that a methodology can alternatively be represented as a series of interrelated states or events, such as in a state diagram. Moreover, not all acts illustrated in a methodology may be required for a novel implementation.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A machine that forms a web into bags or pouches, the machine comprising:
a sealing section through which the web is conveyed in a machine direction, the sealing section configured to form a lap seal in the web and the sealing section having:
an input end configured to receive the web, the web having a first web section and a second web section;
an ultrasonic sealer with a horn and an anvil defining a nip therebetween through which the first web section passes, wherein the ultrasonic sealer is configured to form the lap seal in the first web section, and wherein the anvil is positioned between the first web section and the second web section; and
an output end configured to dispense the web with the lap seal formed therein.

2. The machine according to claim 1, wherein the first web section includes opposing sides of the web that overlap each other; and /or
wherein the web is continuously conveyed through the sealing section and the ultrasonic sealer continuously forms the lap seal in the web.

3. The machine according to claim 1 or 2, wherein the web received via the input end has a tubular shape with an oblong cross section and a void defined between the first web section and the second web section, and wherein the anvil is in the void and each of the first web section and the second web section each pass along opposite sides of the anvil.

4. The machine according to claim 1 or 2, wherein the web defines a void between the first web section and the second web section, and wherein as the web is conveyed through the sealing section the anvil is in the void and each of the first web section and the second web section pass along opposite sides of the anvil; and optionally
wherein the sealing section includes a frame that extends in a cross direction that is transverse to the machine direction, and wherein the frame cantilevers the anvil into the void.

5. The machine according to any preceding claim, wherein the web is conveyed in the machine direction through the machine, and the machine further comprises:
a folding station upstream from the sealing station, the folding station is configured to fold each side of the web in opposite cross directions such that the sides the web overlap each other; and
wherein the first web section includes the overlapping sides of the web.

6. The machine according to claim 5, wherein the folding station is configured to fold the web into a tubular shape; and/or
wherein the folding station is configured to fold the web such that a void is defined by the web, and wherein the anvil is positioned in the void.

7. The machine according to any preceding claim, further comprising a roller system configured to convey the web in the machine direction.

8. The machine according to any preceding claim, wherein the web is conveyed in a machine direction through the machine, and the sealing section further comprises an arm assembly configured extend in the machine direction such that the arm assembly extends between the first web section and the second web section to thereby hold the anvil; and optionally
wherein the sealing section further comprises a frame extending in a cross machine direction and being spaced apart from the web, the frame supports the arm assembly relative to the web.

9. A machine that forms a web into bags or pouches, the web is folded with a first side and an opposite second side of the web overlapping each other such that the web has a first web section comprising the first side and the second side, an opposite second web section, and a void defined between the first web section and the second web section, the machine comprising:
an ultrasonic sealer having a horn and an anvil that are collectively configured to form a lap seal in the first web section as the web is conveyed through the machine in a machine direction;
a frame extending in a cross direction transverse to the machine direction and being spaced apart from the web; and
an arm assembly coupled to the frame and being cantilevered into the void to thereby support the anvil in the void between the first web section and the second web section.

10. The machine according to claim 9, wherein the web has an oblong cross section; and/or
wherein the arm assembly is movable in the cross direction along the frame such that the anvil is repositionable relative to the horn.

11. The machine according to claim 9 or 10, wherein the arm assembly has a first arm that is coupled to the frame, a second arm that extends in the machine direction and holds the anvil, and a channel between the first arm and the second arm; and
wherein the web is conveyed in the machine direction along the arm assembly such that the first side of the web passes through channel; and optionally
wherein the first side of the web is conveyed along a first path along the arm assembly and the second side of the web is conveyed along a second path along the arm assembly before the lap seal is formed in the web.

12. The machine according to any of claims 9 to 11, wherein the arm assembly has a first arm that is coupled to the frame and a second arm that extends in the machine direction and holds the anvil, wherein the second arm includes a cooling component configured to cool the second arm and thereby cool the anvil.

13. A machine that creates bags from a web having a first web section and a second web section, the machine comprising:
a sealing section through which the web is conveyed, the sealing section having an ultrasonic sealer with a horn and an anvil defining a nip therebetween through which the first web section passes such that the ultrasonic sealer is configured to form a lap seal therein, and wherein the anvil is positioned between the first web section and the second web section.

14. The machine according to claim 13, wherein the web is continuously conveyed through the sealing section in a machine direction such that the horn and the anvil continuously form the lap seal in the first web section; and/or
further comprising a roller system that is configured to convey the web through the sealing section.

15. The machine according to claim 13 or 14, wherein the sealing section includes a frame from which the anvil is cantilevered such that the anvil is positioned between the first web section and the second web section; and/or
further composing a folding section upstream of the sealing section, wherein the folding section is configured to fold the web such that the first web section is opposite the second web section and the web has a tubular shape.
